# EUROPÄISCHE PATENTSCHRIFT

(11) **EP 1 383 191 B1**
(45) Veröffentlichungstag und Bekanntmachung des Hinweises auf die Patenterteilung: **03.01.2007**
(21) Anmeldenummer: 02014558.7
(22) Anmeldetag: 01.07.2002
(51) Int. Cl.: H01M 8/04, H01M 8/06, B01D 45/02

(54) **Fluidtrennvorrichtung**
Fluid separation apparatus
Appareil de séparation de fluides

(43) Veröffentlichungstag der Anmeldung: 21.01.2004
(73) Patentinhaber: SFC Smart Fuel Cell AG, 85649 Brunnthal-Nord (DE)
(72) Erfinder: Harbusch, Volker, 81371 München (DE); Huber, Markus, 85567 Grafing b. München (DE); Müller, Jens, Dr., 81827 München (DE); Böhm, Christian, 85636 Siegertsbrunn (DE); Rotkopf, Kurt, 81539 München (DE); Stefener, Manfred, Dr., 80538 München (DE)
(74) Vertreter: Grünecker, Kinkeldey, Stockmair & Schwanhäusser Anwaltssozietät

(56) Entgegenhaltungen:
- WO-A-99/10714
- WO-A-99/46032
- US-A- 5 837 393
- US-A- 6 110 613
- US-B1- 6 238 464
- PATENT ABSTRACTS OF JAPAN vol. 2002, no. 06, 4. Juni 2002 (2002-06-04) & JP 2002 045625 A (KOBE STEEL LTD), 12. Februar 2002 (2002-02-12)

## Beschreibung

### Gebiet der Erfindung

Die Erfindung betrifft eine Fluidtrennvorrichtung für ein Brennstoffzellensystem zur Trennung von Gasen und Flüssigkeiten bei mehreren Fluidströmen und zur Abtrennung flüssigkeitslöslicher Komponenten aus den Gasen. Die Vorrichtung umfasst einen unteren Abschnitt mit einer Fluidzufuhreinrichtung und einer Flüssigkeitsabfuhreinrichtung, einen oberen Abschnitt mit einer Fluidzufuhreinrichtung und einer Gasabfuhreinrichtung, eine Kontaktiereinrichtung, die so vorgesehen ist, dass Gas, das aus dem unteren Abschnitt in den oberen Abschnitt steigt, mit Flüssigkeit kontaktiert wird, die aus dem oberen Abschnitt in den unteren Abschnitt sinkt, und eine Messeinrichtung, um die Menge an Flüssigkeit und/oder Änderungen der Flüssigkeitsmenge im unteren Abschnitt zu ermitteln.

Die erfindungsgemäße Fluidtrennvorrichtung eignet sich besonders zur Steuerung der Fluidströme bei Brennstoffzellensystemen, insbesondere bei DMFC-Systemen.

### Stand der Technik

Die Druckschrift US 6110 613 offenbart eine Fluidtrennvorrichtung zum Stand der Technik.

Bei einigen Brennstoffzellen wird anstelle einer reinen Brennstoffkomponente ein verdünnter Brennstoff verwendet, wofür nachfolgend die Bezeichnung Brennstoffgemisch verwendet wird, auch wenn nicht alle Komponenten dieses Gemisches oxidierbare Substanzen sind.

Bei einer Direkt-Methanol-Brennstoffzelle (DMFC) besteht das anodenseitige Brennstoffgemisch beispielsweise aus in Wasser gelöstem Methanol, wobei letzteres der eigentliche Brennstoff ist. Das Wasser dieses Brennstoffgemischs tritt in der Netto-Bilanzgleichung der Zellreaktion nicht auf, im Unterschied zum (kathodenseitig) als Reaktionsprodukt anfallenden Wasser, das wie das anodenseitig entstehende Reaktionsprodukt Kohlendioxid aus der Zelle abgeführt werden muss. Das Anodenfluid erfährt also auf dem Weg vom Anodeneinlass zum Anodenauslass eine Abreicherung an Methanol und eine Anreicherung an CO₂. Um auch das abgereicherte Anodenfluid optimal zu verwerten zu können und Flüssigkeitsverluste zu vermeiden, wird in der Regel eine anodenseitige Kreislaufströmung bereitgestellt, wobei das Anodenfluid nach dem Austritt aus dem Anodenauslass (entsprechend dem Verbrauch) wieder mit Brennstoff angereichert und dann am Anodeneinlass wieder zugeführt wird. Dabei muss aber Kohlendioxid aus der Kreislaufströmung abgeführt werden.

Beim DMFC-System liegt der überwiegende Anteil von Kohlendioxid gasförmig vor, weil die Löslichkeitsgrenze von Kohlendioxid im Brennstoffgemisch schnell überschritten wird. (Da Wasser im Brennstoffgemisch der mengenmäßig dominierende Stoff ist, entspricht die Löslichkeitsgrenze von Kohlendioxid im Brennstoffgemisch etwa der von Kohlendioxid in Wasser. ) Das aus dem Anodenauslass austretende Fluid ist also in der Regel keine homogene Phase, sondern ein Gas/Flüssigkeit-Gemisch. Wegen der Strömungsverhältnisse sind die flüssige und die gasförmige Phase aber nicht streng räumlich voneinander getrennt; vielmehr bilden sich in der Flüssigkeit Gasblasen aus.

Beim DMFC-System ist die aus dem Anodenauslass austretende flüssige Phase eine i.d.R. mit CO₂ gesättigte Wasser/Methanol-Lösung; in der gasförmigen Phase dominiert CO₂, das mit Wasserdampf und Methanoldampf angereichert ist. Bei einer ungeregelten Abgasabfuhr würde somit der in der Gasphase vorhandene Brennstoff (hier: Methanol) dem System verloren gehen, was nicht nur ökonomisch, sondern auch aus gesundheitlichen und sicherheitstechnischen Gründen inakzeptabel ist. Ferner würde Wasser in Form von Wasserdampf verloren gehen, so dass zur Aufrechterhaltung der Betriebsbedingungen eine externe Wasserzufuhr erforderlich wäre, was im Hinblick auf praktischen Einsatz der Brennstoffzelle inakzeptabel ist.

Die oben genannten Probleme müssen bei der Konzeption und beim Betreiben eines DMFC-System berücksichtigt werden, was herkömmlicherweise wie nachfolgend beschrieben geschieht.

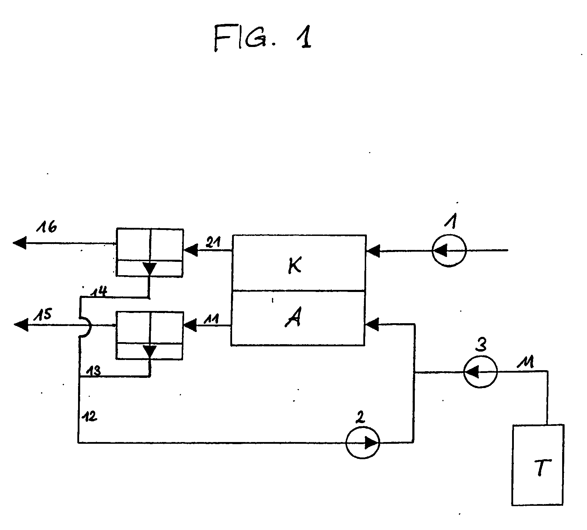

Fig. 1 ist eine Ansicht eines typischen Brennstoffzellensystems nach dem aktuellen internen Stand der Technik. Die DMFC-Brennstoffzelle ist schematisch und nur zur Vereinfachung in eine Kathodenseite K und eine Anodenseite A unterteilt. ("Seite" ist nicht bildlich zu verstehen: tatsächlich besteht eine DMFC-Brennstoffzelle i.d.R. aus einem sog. Stack mit alternierenden Anoden- und Kathodenbereichen).

Das kathodenseitige Fluid umfasst eine oxidierende Substanz wie Sauerstoff, die mittels einer Dosiereinrichtung 1 in Form gewöhnlicher Umgebungsluft zugeführt wird. Dabei werden die nichtverwendbaren Substanzen der Luft, wie Stickstoff, aber auch als Reaktionsprodukt entstehendes Wasser und von der Anoden- zur Kathodenseite diffundierendes CO₂, als ausgangsseitiges Fluid 21 abgeführt.

Das anodenseitige Fluid umfasst neben Methanol ferner die Stoffe Wasser und Kohlendioxid, von denen letzteres als Abgas 15 aus der Brennstoffzelle zu entfernen ist.

Beim in Fig. 1 gezeigten System sind zwei separate Trenneinrichtungen vorgesehen, die beim am Anodenausgang ausgegebenen Fluid 11 eine Gasabscheidung zur Abtrennung von CO₂ durchführen bzw. beim am Kathodenausgang ausgegebenen Fluid 21 eine den anodenseitigen Verlusten entsprechende Rückgewinnung von Wasser durchführen.

Das rückgewonnene Wasser 14 bzw. Wasser/Methanol-Gemisch 13 wird in einen Rückstrom 12 wieder dem Anodeneingang der Brennstoffzelle zugeführt (mittels einer Pumpe 2), wobei Methanol M über eine Dosierpumpe 3 aus einem Vorratstank T beigemischt wird. Die gereinigten Abgase 15, 16 (CO₂, getrocknete Abluft) werden an die Umgebung abgegeben.

Eines der wesentlichen Probleme ist es, die im System vorhandene Wassermenge möglichst konstant zu halten ist, damit die Notwendigkeit einer gesonderten Wasserzufuhr vermieden werden kann. Da Wasser in Form von Wasserdampf sowohl mit den anodenseitig abzuführenden Stoffen, als auch mit den kathodenseitigen Abgasen ("Abluft") abgeführt werden kann, wobei letzteres nicht nur (mengenmäßig abzuführendes) Produktwasser umfasst, sondern auch der Anodenseite zückzuführendes Wasser, dass aufgrund des "Water Drag" -Effekts von der Anoden- zur Kathodenseite gelangt, ist die Aufrechterhaltung einer konstanten Wassermenge in der Brennstoffzelle sehr aufwendig.

### Beschreibung der Erfindung

Angesichts dieser Schwierigkeiten ist es eine Aufgabe der Erfindung, eine Fluidtrenneinrichtung für eine Vielzahl von unterschiedlichen Fluidströmen in einem Brennstoffzellensystem bereitzustellen. Speziell ist es eine Aufgabe, eine Fluidtrenneinrichtung bereitzustellen, die eine einfachere Steuerung des Flüssigkeitshaushalts und der Abfuhr und Reinigung von Abgasen bei einer DMFC-Brennstoffzelle ermöglicht.

Diese Aufgaben werden durch die Fluidtrenneinrichtung für ein Brennstoffzellensystem mit den Merkmalen des Anspruchs 1 gelöst. Vorteilhafte Weiterbildungen sind in den Unteransprüchen angegeben.

Die erfindungsgemäße Fluidtrennvorrichtung umfasst einen unteren Abschnitt mit einer Fluidzufuhreinrichtung und einer Flüssigkeitsabfuhreinrichtung, einen oberen Abschnitt mit einer Fluidzufuhreinrichtung und einer Gasabfuhreinrichtung, eine Kontaktiereinrichtung, die so vorgesehen ist, dass Gas, das aus dem unteren Abschnitt in den oberen Abschnitt steigt, mit Flüssigkeit kontaktiert wird, die aus dem oberen Abschnitt in den unteren Abschnitt sinkt, und eine Messeinrichtung zur Ermittlung der Menge an Flüssigkeit im unteren Abschnitt, und/oder zur Ermittlung der Änderung der Menge an Flüssigkeit.

Die Arbeitsweise der Anordnung ist wie folgt: Flüssige Stoffe, die dem oberen Abschnitt zugeführt werden, oder dort auskondensieren, sinken (in einer Strömung oder als einzelne Tropfen) aufgrund der Gravitationswirkung nach unten. Gase, die dem oberen Abschnitt zugeführt werden, oder dort entstehen, steigen nach oben. In der Kontaktiereinrichtung werden die sinkende Flüssigkeit und die steigenden Gase miteinander kontaktiert, wobei in der Flüssigkeit lösliche Komponenten der Gase in die flüssige Phase übergehen und somit dem Gasstrom entzogen werden.

Die Kontaktiereinrichtung ist flüssigkeitsdurchlässig, kann aber die nach unten gerichtete Flüssigkeitsbewegung wenigstens abbremsen, z.B. durch Aufsaugen oder Aufnehmen einer gewissen Flüssigkeitsmenge. Wird die Kapazität hierfür überschritten, so lässt sie den Flüssigkeitsdurchtritt in den unteren Abschnitt zu. Dadurch können sich auch die dem Gasstrom entzogenen Komponenten in einem Flüssigkeitsreservoir im unteren Abschnitt ansammeln.

Gasförmige Stoffe, die dem oberen Abschnitt zugeführt werden, können direkt über eine Gasabfuhreinrichtung aus dem oberen Abschnitt abgeführt werden. Wenn das zugeführte Fluid sowohl flüssige, als auch gasförmige Anteile aufweist, so bewirkt die Gravitationswirkung deren räumliche Trennung. Der vom unteren in den oberen Abschnitt durchgelassene Gasstrom wird über den Gasauslass (Gasabfuhreinrichtung) des oberen Abschnitts abgeführt.

Die Menge der Flüssigkeit in der Fluidtrennvorrichtung gesammelten Flüssigkeit kann mittels der Messeinrichtung zur Ermittlung der Menge an Flüssigkeit im Flüssigkeitsreservoir des unteren Abschnitts bestimmt werden. Falls notwendig, können zusätzliche Messeinrichtungen vorgesehen sein, um die Menge des in der Kontaktiereinrichutng vorhandenen Wassers bestimmen. In der Praxis kann diese Menge aber entweder als konstant oder als vernachlässigbar angenommen werden, so dass mit der einen Messeinrichtung im unteren Abschnitt die Flüssigkeitsmenge hinreichend genau bestimmt werden kann. In vielen Einsatzgebieten, speziell für Steuerungsverfahren, muss nicht die absolute Menge an Flüssigkeit festgestellt werden. Vielmehr kann es zum Treffen geeigneter Maßnahmen ausreichen, wenn Änderungen der Flüssigkeitsmenge festgestellt werden.

In einer bevorzugten Weiterbildung umfasst die Kontaktiereinrichtung der Fluidtrennvorrichtung ein schwammartiges und/oder ein poröses Material, das für Gas und Flüssigkeiten durchlässig ist, dabei aber eine gewisse Menge an Flüssigkeit aufnehmen und speichern kann. Erst wenn diese Flüssigkeitsmenge überschritten wird, bilden sich an der Unterseite des Materials Flüssigkeitströpfchen, die aufgrund der Schwerkraft schließlich nach unten fallen.

Das schwammartige und/oder poröse Material kann auch nahezu den ganzen unteren Abschnitt ausfüllen. In diesem Fall bildet der Schwamm oder das poröse Material selbst das Flüssigkeitsreservoir.

Zusätzlich oder alternativ zu den obern beschriebenen Weiterbildungen kann die Kontaktiereinrichtung in einer weiteren bevorzugten Weiterbildung wenigstens eine Bodenöffnung und wenigstens ein Überlaufrohr aufweisen. Das Überlaufrohr erstreckt sich vorzugsweise nach unten bis weit in den unteren Abschnitt hinein, damit gewährleistet ist, dass sich die untere Öffnung des Überlaufrohrs unterhalb des Flüssigkeitsspiegels des unteren Abschnitts befindet und Gas nicht über das Überlaufrohr aus dem unteren Abschnitt in den oberen Abschnitt gelangt, sondern ausschließlich über die wenigstens eine Bodenöffnung. Die Betriebsbedingungen müssen dabei so eingestellt werden, dass im unteren Abschnitt ein höherer Druck als im oberen Abschnitt herrscht.

Zusätzlich oder alternativ zur Gesamtmenge an Flüssigkeit kann auch der Anteil einer Komponente eine wichtige Kenngröße sein. Beim eingangs beschriebenen Verwendungszweck ist dies besonders der Methanolanteil im Brennstoffgemisch. Daher umfasst die Fluidtrennvorrichtung vorzugsweise eine Messeinrichtung, um die Menge und/oder die Konzentration wenigstens einer Flüssigkeitskomponente zu ermitteln.

Weicht die ermittelte Konzentration von der erwünschten ab, so kann der fehlende Anteil an geeigneten Stelle des Systems zudosiert werden. Besonders vorteilhaft ist eine direkte Zudosierung in das Flüssigkeitsreservoir der Fluidtrennvorrichtung, so dass in einer bevorzugten Ausführungsform der Fluidtrennvorrichtung eine in den unteren Abschnitt mündende Flüssigkeitszufuhreinrichtung vorgesehen ist.

In einer weiteren bevorzugten Weiterbildung weist die Fluidtrennvorrichtung im oberen Abschnitt Einrichtungen auf, um gasförmige Komponenten des zugeführten Fluids wenigstens teilweise auszukondensieren und/oder Einrichtungen, um flüssige Komponenten des zugeführten Fluids wenigstens teilweise zu verdampfen.

Erstere sind vor allem dann wünschenswert, wenn vor der Zufuhr keine ausreichende Kondensation erfolgt. Alternativ oder zusätzlich kann ein Auskondensieren auch schon vor dem Einritt in die Fluidtrennvorrichtung erfolgen, beispielsweise mit Hilfe eines Wärmetauschers oder einer Kühlfalle. Die Verdampfungseinrichtungen können eine Heizung umfassen, um den gasförmigen Anteil an Wasser auf Kosten des flüssigen zu erhöhen.

Durch diese Einrichtungen lässt sich die Flüssigkeitsmenge steuern, die der gesamten Vorrichtung über die Fluidzuführeinrichtung zugeführt wird.

Vorzugsweise umfasst die Fluidtrennvorrichtung im oberen Abschnitt Einrichtungen, um eine Abfuhr von Flüssigkeit durch die Gasabfuhreinrichtung des oberen Abschnitts zu verhindern. Diese Einrichtungen können beispielsweise gasdurchlässige Membranen in der Gasabfuhreinrichtung umfassen. Ebenfalls vorteilhaft ist eine geeignet dimensionierte, trichterförmige Einrichtung, die verhindert, dass bei einen Umkippen der gesamten Vorrichtung Flüssigkeit aus den unteren Bereichen der Fluidtrennvorrichtung in den oberen Gaseinlass- bzw. Gasauslassbereich gelangen kann.

Nachfolgend wird die Erfindung unter Bezugnahme auf zwei besonders bevorzugte Ausführungsformen erläutert.

Es zeigen:
- Fig. 1:: den schematischen Aufbau eines DMFC-Systems (interner Stand der Technik).
- Fig. 2:: eine erste bevorzugte Ausführungsform der Erfindung;
- Fig. 3:: den schematischen Aufbau eines DMFC-Systems unter Verwendung der ersten bevorzugten Ausführungsform der erfindungsgemäßen Fluidtrennvorrichtung;
- Fig. 4:: eine zweite bevorzugte Ausführungsform der Erfindung;
- Fig. 5:: den schematischen Aufbau eines DMFC-Systems unter Verwendung der zweiten bevorzugten Ausführungsform der erfindungsgemäßen Fluidtrennvorrichtung;

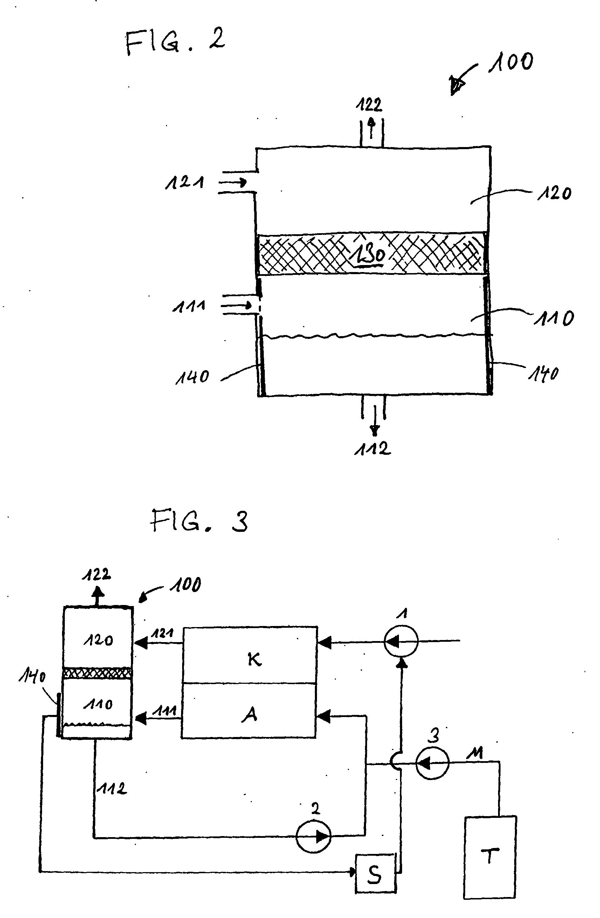

Figur 1 wurde bereits einleitend beschrieben. Modifikationen zu der in Figur 1 gezeigten Anordnung werden unten unter Bezugnahme auf die Figuren 3 und 5 beschrieben, die Anordnungen zeigen, die sich durch die Verwendung von bevorzugten Ausführungsformen der erfindungsgemäßen Fluidtrennvorrichtung ergeben.

Figur 2 zeigt eine erste bevorzugte Ausführungsform der erfindungsgemäßen Fluidtrennvorrichtung 100.

Ein unterer Abschnitt 110 weist eine Fluidzufuhreinrichtung 111 und eine Flüssigkeitsabfuhreinrichtung 112 auf. Ein oberer Abschnitt 120 weist eine Fluidzufuhreinrichtung 121 und eine Gasabfuhreinrichtung 122 auf. Über die beiden Fluidzufuhreinrichtungen 111, 121 können Gase, Flüssigkeiten und Gas/Flüssigkeits-Gemische zugeführt werden. Die Gasabfuhreinrichtung 122 wird zweckmäßigerweise (aber nicht notwendigerweise) an der Oberseite des oberen Abschnitts 120 vorgesehen. Es muss sich dabei nicht unbedingt um einen rohrartigen Auslass 122 handeln. So kann die gesamte obere Abdeckfläche (oder ein Teil davon) durch eine zwar gasdurchlässige, aber wasserundurchlässige (oder zumindest hydrophobe) Membran ersetzt werden, beispielsweise durch eine poröse PTFE-Folie.

Der obere Abschnitt 120 ist vom unteren Abschnitt 110 durch eine schwammartige Kontaktiereinrichtung 130 getrennt, die so ausgebildet ist, dass flüssige Stoffe, die dem oberen Abschnitt 120 über die Fluidzufuhreinrichtung 121 zugeführt werden oder im oberen Abschnitt 120 auskondensieren, durch die Kontaktiereinrichtung teilweise aufgefangen (aufgesogen) werden. Erst wenn die Aufnahmekapazität des Schwamms überschritten wird, lösen sich an seiner Unterseite Tropfen ab und fallen ins Flüssigkeitsreservoir des unteren Abschnitts 110. Gasförmige Stoffe können den oberen Abschnitt 120 dagegen über die Gasabfuhreinrichtung 122 verlassen.

Die Fluidzufuhreinrichtung 121 mündet vorzugsweise in einen Gasraum des unteren Abschnitts 110. Sie ist zu diesem Zwecke an einem oberen Bereich des unteren Abschnitts 110 vorgesehen. Alternativ oder zusätzlich kann sie einen flexiblen Schlauch mit einem Schwimmer umfassen, die so ausgebildet sind, dass über die Fluidzufuhreinrichtung 121 zugeführtes Fluid zuerst in den Gasraum des unteren Abschnitts 110 gelangt.

Wie im oberen Abschnitt 120 bewirkt die Schwerkraft auch im unteren Abschnitt 110, dass ein durch die Fluidzufuhreinrichtung 121 zugeführtes Gas/Flüssigkeits-Gemisch in räumlich getrennte Phasen separiert wird:

Die Flüssigkeit sammelt sich in einem Flüssigkeitsreservoir des unteren Abschnitts 110 und kann über die Flüssigkeitsabfuhreinrichtung 112 entnommen werden. Gasförmige Stoffe dagegen können aus dem unteren Abschnitt 110 nur in den oberen Abschnitt 120 entweichen, wobei sie die Kontaktiereinrichtung 130 durchdringen müssen. Dabei können Komponenten des nach oben strömenden Gases in der abgebremsten oder aufgefangenen Flüssigkeit in Lösung gehen und mit sich ablösenden Flüssigkeitstropfen dem Flüssigkeitsreservoir im unteren Abschnitt 120 zugeführt werden. Einem Abgasgemisch mit Methanoldämpfen kann dadurch auf einfache, aber effiziente Weise Methanol entzogen werden und dem auf dem Boden des unteren Abschnitts 110 befindlichen Flüssigkeitsreservoir zugeführt werden. Das gereinigte Abgas kann zusammen mit der kathodenseitigen Abluft über die Gasabfuhreinrichtung 122 nach außen abgegeben werden.

Die Änderung der Menge (oder die Menge selbst) der im Reservoir angesammelten Flüssigkeit kann über eine Messeinrichtung 140 gemessen werden. Die Messung kann beispielsweise kapazitiv über zwei Kondensatorplatten erfolgen. Ist die Flüssigkeit z.B. hauptsächlich Wasser, so hat sie eine etwa 80 mal höher Dielektrizitätskonstante als die Gasphase, so dass Änderungen der Flüssigkeitsmenge anhand von Änderungen der Kapazität der Kondensatoranordnung mit hoher Genauigkeit festgestellt werden können. Bei geeigneter Eichung können auch Absolutwerte bestimmt werden.

Nachfolgend werden die Funktionen der ersten bevorzugten Ausführungsform der Erfindung anhand von Fig. 3 bei der Verwendung bei einem DMFC-System erläutert. Im Vergleich mit Figur 1 sind in Fig. 3 gleiche oder vergleichbare Merkmale mit einem um 100 erhöhten Bezugszeichen versehen.

Bei DMFC-Brennstoffzellen entsteht durch elektrochemische Umsetzung gasförmiges CO₂, das aus dem Anodenraum der Brennstoffzellen entfernt werden muss. In der Gasphase sind in der Regel aber auch Komponenten des Brennstoffgemisches vorhanden, also beispielsweise Wasserdampf oder in der Gasphase übergegangenes Methanol. Die Anteile dieser Stoff hängen vom jeweiligen Dampfdruck ab, nehmen also i.A. mit der Temperatur zu. Um einen geschlossenen Wasserkreislauf zu gewährleisten und die Abgabe von Brennstoff an die Umgebung zu verhindern, müssen Maßnahmen getroffen werden, um diese Stoffe aus der Gasphase abzutrennen. Durch Diffusion bzw. Mitnahmeeffekte (Water Drag) können CO₂ und Wasser, in geringeren Mengen auch Methanol, auch in den Kathodenraum gelangen.

Somit wird am Anodenausgang ein Fluid abgegeben, das sowohl eine flüssige, als auch eine gasförmige Phase umfasst. Die flüssige Phase ist ein Wasser/Methanolgemisch (mit Wasser als dominierender Komponente), in dem CO₂ gelöst ist. Die gasförmige Phase besteht aus CO₂, Wasserdampf und Methanoldampf. Am Kathodenausgang wird ein Fluid abgegeben, das eine gasförmige Phase und unter Umständen ebenfalls eine flüssige Phase umfasst. Die gasförmige Phase besteht im wesentlichen aus Sauerstoffabgereicherter Luft (Abluft), Wasserdampf, mit geringeren Mengen an CO₂. Die flüssige Phase ist im wesentlichen auskondensiertes Wasser. Zur Erreichung eines geschlossenen Wasserhaushaltes darf nur Wasser nur in solchen Mengen an die Umgebung abgeben werden, wie es als Produktwasser entsteht.

Bei der in Fig. 3 skizzierten Anordnung sind die zwei separate Trenneinrichtungen von Fig. 1 durch eine Ausführungsform der erfindungsgemäßen Fluidtrennvorrichtung 100 ersetzt.

Das am Kathodenausgang ausgegebene Fluid wird der Fluidtrennvorrichtung 100 über die Fluidzufuhreinrichtung 121 des oberen Abschnitts 120 zugeführt. Das am Anodenausgang ausgegebene Fluid wird der Fluidtrennvorrichtung 100 über die Fluidzufuhreinrichtung 111 des unteren Abschnitts 110 zugeführt. In beiden Fluiden erfolgt zunächst aufgrund der Gravitationswirkung eine räumliche Trennung in eine flüssige Phase und eine Gasphase.

Das rückgewonnene Wasser/Methanol-Gemisch wird über die Flüssigkeitsentnahmeeinrichtung 112 wieder dem Anodeneingang der Brennstoffzelle zugeführt (mittels einer Pumpe 2), wobei entsprechend der verbrauchten Methanolmenge über eine Dosierpumpe 3 reines Methanol M aus einem Vorratstank T beigemischt wird. Die gereinigten Abgase (CO₂, Abluft) werden über die Gasabfuhreinrichtung 122 die Umgebung abgegeben.

Zur Aufrechterhaltung des Betriebs ist es erforderlich, die Gesamtwassermenge im System innerhalb bestimmter Toleranzgrenzen konstant zu halten, also z.B. einer mit der Abgas-Abgabe verbundene exzessive (also die Wasserproduktion übersteigende) Wasserabgabe gegenzusteuem oder umgekehrt bei einer Zunahme der Wassermenge die Abfuhr zu erhöhen.

Im vorliegenden Beispiel können Änderungen der Wassermenge anhand von Änderungen der Kapazität der Messeinrichtung 140 verfolgt werden. Eine Steuereinrichtung S kann anhand dieser Änderungen die Dosiereinrichtung 1 ansteuern, um den kathodenseitigen Fluidstrom senken, was eine verringerte Wasserabfuhr aus dem System bewirkt, oder erhöhen, wodurch die Wasserabfuhr verstärkt wird. Ein alternativer oder zusätzlicher Steuermechanismus ist in Fig. 5 angedeutet und besteht in der Regelung der Systemtemperatur (bei höheren Temperaturen erhöht sich die Feuchte der Gase und damit die Wasserabfuhr).

Mit der erfindungsgemäßen Fluidtrennvorrichtung ist es daher vergleichsweise einfach, die Bedingung einer konstanten Wassermenge in der Brennstoffzelle zu erfüllen.

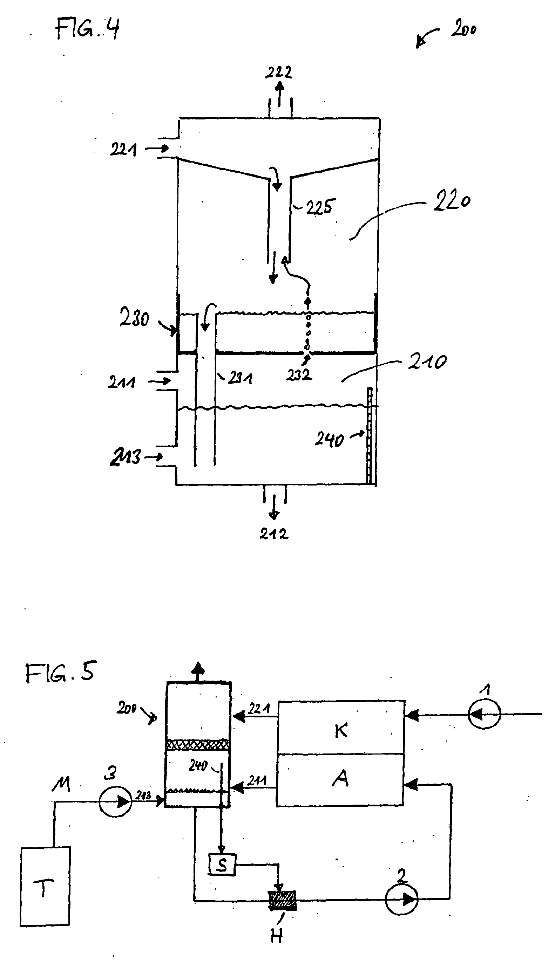

Figur 4 zeigt eine zweite bevorzugte Ausführungsform der erfindungsgemäßen Fluidtrennvorrichtung 200. Im Vergleich mit Figur 2 sind gleiche oder vergleichbare Merkmale mit einem um 100 erhöhten Bezugszeichen versehen.

Der untere Abschnitt 210 weist wiederum eine (in den oberen Bereich des Abschnitts 210 mündende) Fluidzufuhreinrichtung 211 und eine Flüssigkeitsabfuhreinrichtung 112 auf. Zusätzlich ist eine (in den unteren Bereich des Abschnitts 210 mündende) Flüssigkeitszufuhreinrichtung 213 vorgesehen. Der obere Abschnitt 220 weist wie bei der in Fig. 2 gezeigten Ausführungsform eine Fluidzufuhreinrichtung 221 auf, über die Gase, Flüssigkeiten und Gas/Flüssigkeits-Gemische zugeführt werden könnte, sowie eine Gasabfuhreinrichtung 222 (die oben angeordnet ist, aber auch seitlich angeordnet sein kann). Aufgrund der Schwerkraftwirkung und der stark reduzierten Strömungsgeschwindigkeit und -falls notwendig, unterstützt durch eine nicht gezeigte Kondensationseinrichtung - erfolgt im oberen Bereich des Abschnitts 220 eine räumliche Trennung der gasförmigen und flüssigen Phasenanteile, wobei erstere über die Gasabfuhreinrichtung 222 abgeführt werden können, letztere über eine trichterförmige Abflusseinrichtung 225 nach unten abgeleitet werden. Die Trichterform ist zwar besonders zweckmäßig, aber nicht aber zwingend erforderlich. Durch geeignete Wahl der Länge des Trichterrohrs kann vermieden werden, dass bei einem Kippen der gesamten Vorrichtung 200 Flüssigkeit von unten nach oben gelangt. Ferner kann das Trichterrohr auch eine Kontaktierwirkung haben, da hier Flüssigkeit und Gase aneinander vorbei strömen. Diese Wirkung kann noch verstärkt werden, wenn im Trichterrohr ein schwammartiges, saugfähiges Material vorgesehen wird (Wirkungsweise wie anhand von Fig. 2 beschrieben.)

Die beiden Abschnitte 210, 220 sind durch eine wannenartige Kontaktiereinrichtung 230 voneinander getrennt, die ein in den unteren Abschnitt 231 mündendes Überlaufrohr 231 aufweist, so dass flüssige Stoffe, die über Abflusseinrichtung 225 nach unten abgeleitet werden, durch die Kontaktiereinrichtung 230 teilweise aufgefangen werden und erst ab einen bestimmten Füllstand (mit Überschreiten der Oberkante des Überlaufrohrs 231) in den unteren Abschnitt 210 strömen können.

Gasförmige Stoffe, die mit dem über die Fluidzufuhreinrichtung 211 zugeführtem Fluid in den unteren Abschnitt 210 gelangen, können über eine Bohrung 232 in der Kontaktiereinrichtung 230 nach oben entweichen, müssen dabei aber die darin aufgefangene Flüssigkeit durchqueren. Dabei können Gaskomponenten wie Methanol in Lösung gehen und über das Überlaufrohr der Flüssigkeit im unteren Abschnitt 220 zugeführt werden.

Mit den Ausführungsformen von Fig. 2 und 4 ist eine sehr effektive Abgasreinigung möglich, wobei der Methanolgehalt der Abgase drastisch reduziert werden kann. Ebenso kann der Feuchtigkeitsgehalt der Abgase stark reduziert werden. Es ist aber zu beachten, dass die dem entstehenden Wasser entsprechende Menge abgeführt werden muss, damit die Wassermenge im System nicht kontinuierlich zunimmt. Daher sollten die Vorrichtungen 100 und 200 im Hinblick auf das Einsatzgebiet so dimensioniert werden, dass in etwa diese Produktwassermenge als Wasserdampf mit den Abgasen 122 bzw. 222 abgeschieden wird, was in der Regel aber nur näherungsweise und nicht exakt möglich sein wird. Um Abweichungen davon feststellen und gegensteuern zu können, werden Messeinrichtungen 140, 240 zur Ermittlung der Flüssigkeitsmenge bzw. von Änderungen der Flüssigkeitsmenge im unteren Abschnitt bereitgestellt.

Neben den schon erwähnten Beispielen kann das Gegensteuern auch durch eine Heizung erfolgen, die im kathodenseitig zugeführten Fluid das Verhältnis von gasförmigen zu flüssigem Wasser regelt. Eine solche Heizung kann separat von und außerhalb der Fluidtrennvorrichtung vorgesehen sein, aber auch in die Fluidtrennvorrichtung integriert sein. Alternativ kann ein regelbarer Kondensator oder ein Wärmetauscher, an dem das ausgegebene Kathodenfluid vorbeigeführt wird, zum Gegensteuern verwendet werden.

Bei der in Fig. 4. gezeigten Ausführungsform ist als Messeinrichtung ein Füllstandmesseinrichtung 240 vorgesehen, die das Niveau der Flüssigkeitsoberfläche ermittelt. Da die Flüssigkeit aufgrund des darin gelösten CO₂ elektrisch leitfähig ist, kann die Füllstandmessung über die Leitfähigkeit erfolgen: beispielsweise können auf unterschiedlichen Niveaus Elektrodenpaare vorgesehen sein, die durch die Flüssigkeit kurzgeschlossen werden. Alternativ dazu könnten die Kapazitäten von Kondensatoren bzw. die Kapazitätsänderungen als Messgröße verwendet werden. Technisch einfach realisierbar sind auch optische Messmethoden, die auf den unterschiedlichen optischen Eigenschaften der Gasphase und der Flüssigkeit beruhen; zu diesen Eigenschaften gehören: Brechungsindex, Absorption, Transmission. So können beispielsweise paarweise angeordnete Diodenpaare vorgesehen werden, von denen jeweils eine als Sende- und die andere als Empfängerdiode fungiert und mit denen festgestellt werden kann, ob sich zwischen ihnen Flüssigkeit befindet.

Die Füllstandmesseinrichtung 240 ist vorzugsweise so anzuordnen und auszubilden, dass vernünftige Messergebnisse auch noch dann ermittelbar sind, wenn die Ausrichtung der Fluidtrenneinrichtung von der Vertikalen abweicht. Eine mehr zentrale Anordnung ist dabei der skizzierten seitlichen Anbringung eindeutig vorzuziehen.

Beispielsweise anhand des zu ermittelnden Brennstoffverbrauchs lässt sich bestimmen, wieviel Brennstoff der Kreislaufströmung zudosiert werden muss. Im vorliegenden Fall (Fig. 4) kann der Brennstoff M über die Flüssigkeitszufuhreinrichtung 213 direkt in den unteren Abschnitt 210 zugeführt werden, was eine einfachere Ausbildung des Anodenkreislaufes ermöglicht. Alternativ zum Brennstoffverbrauch lässt sich die Menge des zuzudosierenden Brennstoffs M durch Messen der Brennstoffkonzentration in der Flüssigkeit im unteren Abschnitt 210 ermitteln.

Fig. 5 dient zur Erläuterung der Funktionsweise der zweiten bevorzugten Ausführungsform der Erfindung anhand ihrer Verwendung bei einem DMFC-System. Gegenüber Fig. 3 sind gleiche oder vergleichbare Merkmale mit einem um 100 erhöhten Bezugszeichen versehen.

Im Unterschied zur Fig. 3 wird hier Methanol aus dem Tank T direkt dem Wasser/Methanol-Gemisch im unteren Abschnitt der Fluidtrennvorrichtung 200 zugeführt. Die Menge des zuzudosierenden reinen Methanols M kann beispielsweise über einen (nicht gezeigten) Konzentrationssensor im unteren Abschnitt 210 oder den, anhand der Systemleistung berechenbaren Methanolverbrauch ermittelt werden.

Änderungen der Wassermenge können anhand des Füllstandsensor 240 verfolgt werden. Eine Steuereinrichtung S kann anhand dieser Änderungen einen (beispielsweise im Anodenkreislauf vorgesehenen) Heizer H ansteuern, um die Wasserabfuhr aus dem System entsprechend anzupassen: bei höheren Temperaturen erhöht sich die mit den Abgase abgeführte Wassermenge.

Bei der in Fig. 5 gezeigten Anordnung dient der untere Abschnitt der Fluidtrenneinrichtung 200 gleichzeitig als Mischkammer.

Die oben beschriebenen Ausführungsformen dienen lediglich zur anschaulichen Erläuterung der der Erfindung zugrunde liegenden Prinzipien. Insbesondere soll der Tatsache, dass die zweite bevorzugte Ausführungsform (Fig. 4) der Erfindung gegenüber der ersten (Fig. 2) zusätzliche Einrichtungen umfasst, keine einschränkende Bedeutung zugemessen werden. Diese zusätzlichen Einrichtungen können selbstverständlich ebenso in die erste Ausführungsform integriert werden, wie sie in der zweiten Ausführungsform auch weggelassen werden können. Der Schutzbereich der Erfindung wird allein durch die nachfolgenden Patentansprüche definiert.

## Patentansprüche

1. Eine Fluidtrennvorrichtung (100) für ein Brennstoffzellensystem, umfassend:
einen unteren Abschnitt (110) mit einer Fluidzufuhreinrichtung (111) und einer Flüssigkeitsabfuhreinrichtung (112),
einen oberen Abschnitt (120) mit einer Fluidzufuhreinrichtung (121) und einer Gasabfuhreinrichtung (122),
eine Kontaktiereinrichtung (130), die so vorgesehen ist, dass Gas, das aus dem unteren Abschnitt (110) in den oberen Abschnitt (120) steigt, mit Flüssigkeit kontaktiert wird, die aus dem oberen Abschnitt (120) in den unteren Abschnitt (120) sinkt, und
eine Messeinrichtung (140) zur Ermittlung der Flüssigkeitsmenge im unteren Abschnitt (120) und/oder zur Ermittlung von Änderungen der Flüssigkeitsmenge.

2. Eine Fluidtrennvorrichtung (100) nach Anspruch 1, bei welcher die Kontaktiereinrichtung (130) ein schwammartiges und/oder poröses Material umfasst.

3. Eine Fluidtrennvorrichtung nach Anspruch 2, bei welcher die Kontaktiereinrichtung im wesentlichen den ganzen unteren Abschnitt ausfüllt.

4. Eine Fluidtrennvorrichtung (200) nach einem der vorangegangenen Ansprüche, bei welcher die Kontaktiereinrichtung (230) wenigstens eine Bodenöffnung (232) und wenigstens ein Überlaufrohr (231) aufweist.

5. Eine Fluidtrennvorrichtung nach einem der vorangegangenen Ansprüche, umfassend eine Messeinrichtung, um die Menge und/oder die Konzentration wenigstens einer Flüssigkeitskomponente zu ermitteln.

6. Eine Fluidtrennvorrichtung (200) nach einem der vorangegangenen Ansprüche, umfassend eine Flüssigkeitszufuhreinrichtung (213), die in den unteren Abschnitt (210) mündet.

7. Eine Fluidtrennvorrichtung nach einem der vorangegangenen Ansprüche, bei welcher der obere Abschnitt Einrichtungen umfasst, um gasförmige Komponenten des zugeführten Fluids wenigstens teilweise auszukondensieren und/oder flüssige Komponenten des zugeführten Fluids wenigstens teilweise zu verdampfen.

8. Eine Fluidtrennvorrichtung (200) nach einem der vorangegangenen Ansprüche, bei welcher der obere Abschnitt (210) Einrichtungen (225) umfasst, um eine Abfuhr von Flüssigkeit durch die Gasabfuhreinrichtung (222) des oberen Abschnitts (210) zu verhindern.

## Claims

1. Fluid separating device (100) for a fuel cell system, comprising:
a lower section (110) with a fluid feeding device (111) and a device for removing liquid (112),
an upper section (120) with a fluid feeding device (121) and a device for removing gas (122),
a contact device (130), which is provided such that gas rising from the lower section (110) into the upper section (120) is contacted with liquid which sinks from the upper section (120) into the lower section (120), and
a measuring device (140) for determining the amount of liquid in the lower section (120) and/or for determining alterations of the amount of liquid.

2. Fluid separating device (100) according to claim 1, in which the contact device (130) comprises a sponge-like and/or porous material.

3. Fluid separating device according to claim 2, in which the contact device essentially occupies the complete lower section.

4. Fluid separating device (200) according to one of the preceding claims, in which the contact device (230) comprises at least one bottom opening (232) and at least one overflow pipe (231).

5. Fluid separating device according to one of the preceding claims, comprising a measuring device for determining the amount and/or the concentration of at least one liquid component.

6. Fluid separating device (200) according to one of the preceding claims, comprising a liquid feeding device (213) ending in the lower section (210).

7. Fluid separating device according to one of the preceding claims, in which the upper section comprises means for condensing at least a part of gaseous components of the supplied fluid and/or evaporating at least a part of liquid components of the supplied fluid.

8. Fluid separating device (200) according to one of the preceding claims, in which the upper section (210) comprises means (225) for avoiding a discharge of liquid through the gas discharging device (222) of the upper section (210).

## Revendications

1. Dispositif de séparation de fluides (100) pour un système à cellules de combustible comprenant :
une section inférieure (110) avec un système d'arrivée de fluide (111) et un système d'évacuation de liquide (112),
une section supérieure (120) avec un système d'arrivée de fluide (121) et un système d'évacuation de gaz (122),
un système de contact (130) prévu de sorte que le gaz qui monte de la section inférieure (110) dans la section supérieure (120) entre en contact avec le liquide qui descend de la section supérieure (120) dans la section inférieure (110), et
un système de mesure (140) destiné à déterminer la quantité de liquide dans la section inférieure (120) et/ou à déterminer les modifications de la quantité de liquide.

2. Dispositif de séparation de fluides (100) selon la revendication 1, pour lequel le système de contact (130) comprend un matériau spongieux et/ou poreux.

3. Dispositif de séparation de fluides selon la revendication 2, pour lequel le système de contact remplit principalement la totalité de la section inférieure.

4. Dispositif de séparation de fluides (200) selon l'une quelconque des revendications précédentes, pour lequel le système de contact (230) comporte au moins un orifice au plancher (232) et au moins un tuyau de trop-plein (231).

5. Dispositif de séparation de fluides selon l'une quelconque des revendications précédentes, comprenant un système de mesure destiné à déterminer la quantité et/ou la concentration d'au moins un composant du liquide.

6. Dispositif de séparation de fluides (200) selon l'une quelconque des revendications précédentes, comprenant un système d'arrivée de liquide (213) qui débouche dans la section inférieure (210).

7. Dispositif de séparation de fluides selon l'une quelconque des revendications précédentes, pour lequel la section supérieure comprend des systèmes destinés à condenser au moins partiellement les composants gazeux du fluide amené et/ou à évaporer au moins partiellement les composants liquides du fluide amené.

8. Dispositif de séparation de fluides (200) selon l'une quelconque des revendications précédentes, pour lequel la section supérieure (210) comprend des systèmes (225) destinés à empêcher le liquide de s'évacuer par le système d'évacuation de gaz (222) de la section supérieure (210).
